# EUROPÄISCHE PATENTSCHRIFT

(11) **EP 0 804 889 B1**
(45) Veröffentlichungstag und Bekanntmachung des Hinweises auf die Patenterteilung: **18.06.2003**
(21) Anmeldenummer: 97106443.1
(22) Anmeldetag: 18.04.1997
(51) Int. Cl.: A47C 3/30, F16F 9/02

(54) **Stuhl-Gasfeder**
Gas spring for a chair
Ressort à gaz pour chaise

(30) Priorität: 04.05.1996 DE 29608147 U
(43) Veröffentlichungstag der Anmeldung: 05.11.1997
(73) Patentinhaber: SUSPA Compart GmbH, 92237 Sulzbach-Rosenberg (DE)
(72) Erfinder: Wolf, Herbert, 90518 Altdorf (DE); Weisser, Frank, 91257 Pegnitz (DE)
(74) Vertreter: Rau, Manfred, Dr. Dipl.-Ing.

(56) Entgegenhaltungen:
- EP-A- 0 687 832
- DE-A- 1 812 282
- DE-B- 1 263 245
- US-A- 4 834 347

## Beschreibung

Die Erfindung betrifft eine Stuhl-Gasfeder nach dem Oberbegriff des Anspruches 1.

Stuhl-Gasfedern der gattungsgemäßen, beispielsweise aus EP 0 687 832 A1 bekannten Art, haben sich zigmillionenfach in der Praxis bewährt. Sie haben in der Regel einen Verstellweg, der sich aus den gewünschten Höheneinstellmöglichkeiten ergibt, die wesentlich von der Differenz in der Körpergröße der Benutzer abhängt. Mit zunehmender Körpergröße eines Teils der Bevölkerung steigt das Bedürfnis, größere unterschiedliche Höheneinstellbereiche für Stühle zu erreichen, wobei entscheidend die Position der Sitzfläche in belastetem Zustand ist.

Verlängerungen der Gasfeder sind nur mit erheblichem Aufwand möglich, da dies die Gesamtkonstruktion der Stuhlsäulen beeinflussen würde. Weiterhin ist es bekannt, die Stuhlsäulen insgesamt gegenüber dem Fußkreuz eines Stuhles in der Höhe verstellbar zu machen, wodurch aber die Grundeinstellung des Stuhls verändert wird; sie ist also nicht für einen verlängerten Höhenverstellbereich nutzbar.

Der Erfindung liegt daher die Aufgabe zugrunde, eine Stuhl-Gasfeder der gattungsgemäßen Art so auszugestalten, dass sie einen maximal möglichen Höhenverstellbereich in belastetem Zustand aufweist.

Diese Aufgabe wird erfindungsgemäß durch die Merkmale im Kennzeichnungsteil des Anspruches 1 gelöst. Durch die erfindungsgemäßen Maßnahmen wird erreicht, daß der Einfederweg bei völlig ausgefahrener Kolbenstange und in belastetem Zustand auf ein Minimum reduziert wird. Dieser bei üblichen Gasfedern der gattungsgemäßen Art vorhandene Einfederweg verkürzt die tatsächlich nutzbare Verstellänge. Bei völlig ausgefahrener Kolbenstange ist die Gasfeder angenähert starr. Bei nur relativ geringfügig eingeschobener Kolbenstange, also bei einer geringfügig unterhalb der maximal möglichen Sitzhöhe befindlichen Einstellung hat die erfindungsgemäße Stuhl-Gasfeder bereits wieder die ihr eigenen vorteilhaften Federeigenschaften.

Vorteilhafte Ausgestaltungen ergeben sich aus den Unteransprüchen.

Weitere Merkmale, Einzelheiten und Vorteile ergeben sich im übrigen aus der Beschreibung eines Ausführungsbeispieles anhand der Zeichnung. Es zeigt
- Fig. 1: eine Stuhlsäule mit einer Stuhl-Gasfeder im vertikalen Längsschnitt und
- Fig. 2: ein den Einfederweg über dem Einschubmaß zeigendes Diagramm.

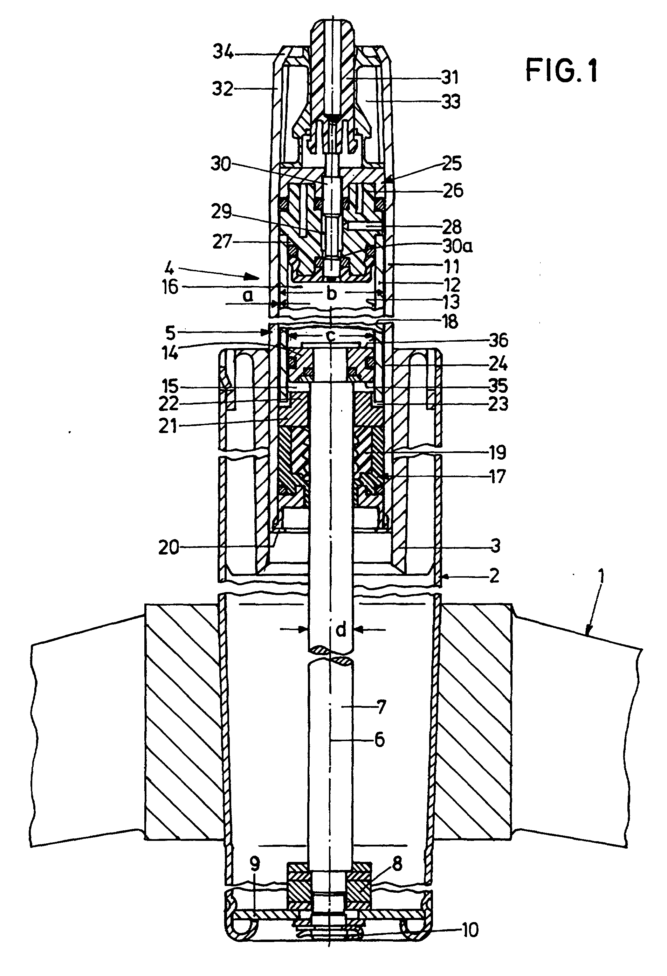

Die in Fig. 1 dargestellte Stuhlsäule weist ein an einem Fußkreuz 1 angebrachtes Führungsrohr 2 auf, das an seinem oberen offenen Ende mit einer Führungsbüchse 3 versehen ist. In dem Führungsrohr 2 ist eine längenverstellbare Gasfeder 4 angeordnet, deren Gehäuse 5 in der Führungsbüchse 3 in Richtung einer gemeinsamen Mittel-Längs-Achse 6 verschiebbar geführt angeordnet ist. Aus dem Gehäuse 5 ist nach unten eine Kolbenstange 7 herausgeführt, deren freies Ende mittels eines Axial-Lagers 8 auf einem Boden 9 des Führungsrohres 2 abgestützt und an diesem mittels eines Befestigungselementes 10 befestigt ist.

Das Gehäuse 5 der Gasfeder 4 weist einen Außenzylinder 11 und einen konzentrisch in diesem angeordneten Innen-Zylinder 12 auf. An der Innenwand 13 des Innenzylinders 12 liegt ein Kolben 14 abgedichtet an, der am inneren Ende der Kolbenstange 7 angebracht ist. Der Kolben 14 teilt den Innenzylinder 12 in zwei Gehäuseräume 15, 16.

Die Kolbenstange 7 ist im Bereich ihres Austritts aus dem Gehäuse 5 in einer Führung 17 geführt, die gegenüber der Innenwand 18 des Außenzylinders 11 abgedichtet ist und in der eine Mehrfach-Lippen-Dichtung 19 angeordnet ist, die an der Kolbenstange 7 anliegt. Die Führung 17 ist mittels einer Umbördelung 20 des Außenzylinders 11 gehalten. Durch die geschilderte Ausgestaltung ist die Gasfeder 4 am Austritt der Kolbenstange 7 gas- und flüssigkeitsdicht verschlossen. Zum benachbarten Gehäuseraum 15 hin ist ein an der Führung 17 anliegender und die Dichtung 19 überdeckender Zentrierring 21 angeordnet, der einerseits an der Innenwand 18 des Außenzylinders 11 anliegt und dadurch zur Achse 6 zentriert ist und der andererseits einen den Innenzylinder 12 aufnehmenden und zur Achse 6 zentrierenden Zentrierbund 22 aufweist. Außerdem ist der Innenzylinder 12 in Richtung der Achse 6 am Zentrierring 21 abgestützt. Im Zentrierring 21 sind Verbindungskanäle 23 ausgebildet, die den zwischen dem Kolben 14 und dem kolbenstangenaustrittseitigen Ende des Gehäuses 5 ausgebildeten Gehäuseraum 15 mit einem zwischen dem Außenzylinder 11 und dem Innenzylinder 12 ausgebildeten spaltartigen ringförmigen Überströmkanal 24 verbinden.

An dem dem Kolbenstangenaustritt entgegengesetzten Ende ist im Gehäuse 5 ein Ventil 25 angeordnet, dessen Ventilgehäuse 26 abgedichtet an der Innenwand 18 des Außenyzlinders 11 und der Innenwand 13 des Innenzylinders 12 anliegt und das mittels eines Zentrierbundes 27 den Innenzylinder 12 zur Achse 6 zentriert und das den Innenzylinder 12 in Richtung der Achse 6 abstützt. Das Ventilgehäuse 26 weist einen an den Überströmkanal 24 angeschlossenen Verbindungskanal 28 auf, der an einen konzentrisch zur Achse 6 im Ventilgehäuse 26 ausgebildeten Verbindungsraum 29 angeschlossen ist, der mit dem Gehäuseraum 16 zwischen dem Ventil 25 und dem Kolben 14 verbindbar ist. Zur Herstellung bzw. Sperrung dieser Verbindung ist ein Ventilstift 30 vorgesehen, der beim Einschieben in Richtung zum Gehäuseraum 16 eine Schließstelle 30a öffnet und damit den Verbindungsraum 29 mit dem Gehäuseraum 16 verbindet und der in seiner in der Zeichnung dargestellten Ruhelage die Schließstelle 30a schließt und damit den Verbindungsraum vom Gehäuseraum 16 trennt. Der Ventilstift 30 ist nach außen aus dem Ventilgehäuse 26 herausgeführt und liegt dort gegen einen Schieber 31 an, der in einem Befestigungsabschnitt 32 des Gehäuses 5 in Richtung der Achse 6 verschiebbar geführt und gehalten ist. Hierzu ist im Befestigungsabschnitt 32 ein Distanzstück 33 angeordnet, das durch eine Umbördelung 34 des Außenzylinders 11 gehalten ist. Dieses Distanzstück 33 hält auch das Ventil 25 in seiner axialen Lage. An diesem Befestigungsabschnitt 32 kann der Sitzträger eines Stuhles oder Sessels befestigt werden. Der Schieber 31 wird mittels eines Hebels oder dergleichen betätigt.

Die Gehäuseräume 15, 16 und die Verbindungskanäle 23, 28, der Verbindungsraum 29 und der Überströmkanal 24 sind mit Druckgas und gegebenenfalls etwas Öl gefüllt. Wenn das Ventil 25 geschlossen ist, kann die Kolbenstange 7 mit dem Kolben 14 relativ zum Gehäuse 5 federn. Wenn die Schließstelle 30a des Ventils 25 durch Einschieben des Ventilstiftes 30 in Richtung zum Gehäuseraum 16 geöffnet wird, dann kann entweder Gas aus dem Gehäuseraum 15 durch die Verbindungskanäle 23, den Überströmkanal 24, den Verbindungskanal 28 und den Verbindungsraum 29 in den Gehäuseraum 16 oder umgekehrt strömen, je nach dem, welche Kraft auf die Kolbenstange 7 in Richtung der Achse 6 wirkt. Der Aufbau der gesamten Stuhlsäule einschließlich der Gasfeder 5 und ihrer Wirkungsweise als Stuhl-Gasfeder mit Ausnahme der Ausgestaltung des Überströmkanals 27 sind bekannt, und zwar beispielsweise aus der grundlegenden DE-PS 18 12 282 (entspr. US-PS 3 656 593 und JP-PS 846 405).

Der Überströmkanal 24 ist als ein extrem enger spaltartiger ringförmiger Überströmkanal ausgebildet, der ein extrem niedriges Volumen aufweist. Seine Spaltweite a ist sehr gering; bei einem üblichen Innendurchmesser b des Außenzylinders 11 von ca. 24 mm gilt a ≅ 0,1 mm. Dies gilt, wenn der Innendurchmesser c des Innenzylinders 12 c = 20 mm und der Durchmesser d der Kolbenstange d = 10 mm ist.

Wesentlich ist, daß bei weitestmöglich aus dem Gehäuse 5 herausgefahrener Kolbenstange 7, also bei gemäß der Darstellung in Fig. 1 an dem Zentrierring 21 und damit der Führung 17 anliegendem Kolben 14, das Volumen V_{U} der zwischen der Kolben-Unterseite 35 und der Schließstelle 30a ausgebildeten Gehäuseräume klein ist im Verhältnis zum Volumen V_{O} des zwischen der Kolbenoberseite 36 und der Schließstelle 30a ausgebildeten Gehäuseraumes 16. Die Kolbenunterseite 35 ist dem Zentrierring 21 und der Führung 17 zugewandt; die Kolbenoberseite 36 ist dem Ventil 25 zugewandt. Bei geschlossenem Ventil wird das Volumen V_{U} gebildet durch die verbleibenden Reste des Gehäuseraumes 15 und die Volumina der Verbindungskanäle 23, des Überströmkanals 24, des Verbindungskanals 28 und des Verbindungsraumes 29. Nur auf das Volumen des Überströmkanals 24 hat man konstruktiv nennenswerten Einfluß. Das Volumen V_{O} ist gebildet durch den Gehäuseraum 16, der durch die dem Ventil 25 zugewandte Kolbenoberseite 36 einerseits und das Ventilgehäuse 26 bis zur Schließstelle 30a andererseits und naturgemäß die Innenwand 13 des Innenzylinders 12 begrenzt wird. Es gilt V_{O}/V_{U} > 10. Bevorzugt ist V_{O}/V_{U} > 20. Ganz besonders bevorzugt gilt V_{O}/V_{U} > 30 und noch weiter bevorzugt V_{O}/V_{U} > 40

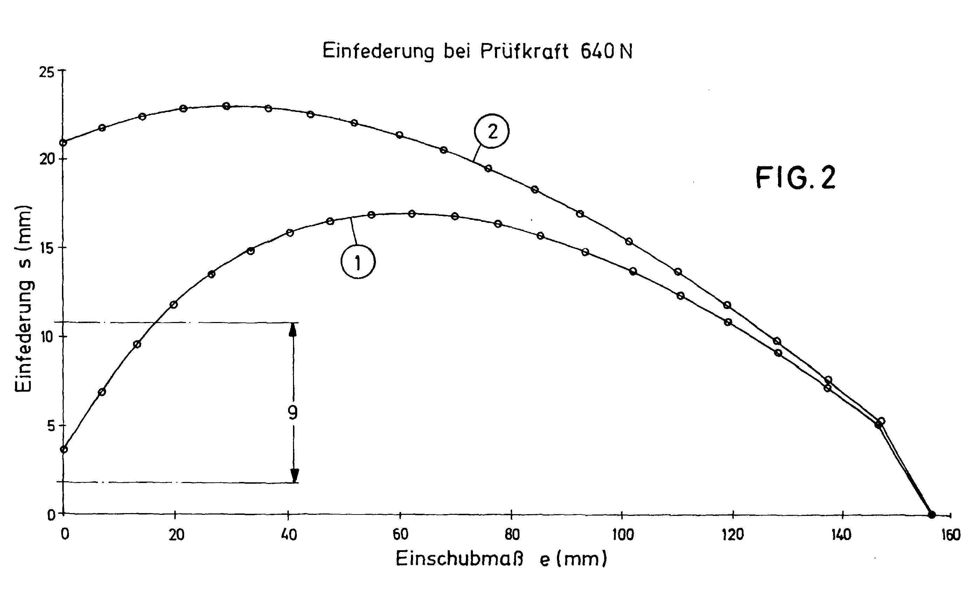

Durch die geschilderte Ausgestaltung wird erreicht, daß die verfügbare Verstellänge der Gasfeder vergrößert wird. Dies sei unter anderem anhand des Diagramms nach Fig. 2 erläutert.

Für die untere mit 1 im Kreis gekennzeichnete Kurve gilt V_{O}/V_{U} = 41,8. Diese bezieht sich auf eine Gasfeder mit den oben angegebenen Maßen. Das Gehäuse 5 der Gasfeder ist mit Gas unter einem Druck von ca. 4 MPa gefüllt. Die Kolbenstange 7 wird jeweils ausgehend von ihrer völlig ausgefahrenen Stellung in kleinen Schritten um ein Einschubmaß e bei jeweils geöffnetem Ventil 25 in das Gehäuse hineingeschoben. Bei an der Führung 17 anliegendem Kolben 14 ist zwischen diesen Teilen praktisch kein gasgefülltes Volumen. Anschließend wird das Ventil 25 durch Entlasten des Ventilstiftes 30 geschlossen. Danach wird die Gasfeder von der für das Einschieben der Kolbenstange 7 erforderlichen Kraft entlastet, so daß die Kolbenstange 7 wieder etwas aus dem Gehäuse 5 ausgefahren wird. Das maximale Einschubmaß e ist erreicht, wenn der Kolben 14 mit seiner Kolbenoberseite 36 am Ventil 25 anliegt. In diesen einzelnen Positionen wird die Gasfeder 4 mit einer sie zusammendrückenden Prüfkraft P = 640 N belastet, wodurch simuliert wird, daß ein Benutzer auf einem Stuhl sitzt.

Durch diese einer Last entsprechende Prüfkraft P federt die Kolbenstange jeweils um einen Weg s in das Gehäuse 5 ein. Dieser Einfederweg s ist in dem Diagramm nach Fig. 2 über dem Einschubmaß e jeweils in mm aufgetragen. Wenn das Ventil 25 bei voll ausgefahrener Kolbenstange 7 geschlossen wird, dann beträgt bei dem gewählten Beispiel der Einfederweg s nur 2 mm. Ein größerer Einfederweg s von etwa 4 mm ergibt sich, wenn das Ventil 25 bei einer leicht in das Gehäuse eingefahrenen Stellung der Kolbenstange 7 geschlossen wird, wobei diese Position so gewählt ist, daß bei der Entlastung der Kolbenstange 7 von der Einschubkraft die Kolbenstange 7 gerade noch wieder bis zum Anschlag der Kolbenunterseite 35 an der Führung 17 aus dem Gehäuse 5 ausgeschoben wird. Aus diesem Grunde hat das Diagramm ganz am Anfang einen senkrechten Abschnitt.

Zum Vergleich ist in der mit 2 im Kreis gekennzeichneten Kurve in Fig. 2 der Einfederweg für eine gleichartige Gasfeder dargestellt, bei der gilt V_{O}/V_{U} = 4,4. Während im zuerst geschilderten Fall bei völlig ausgefahrener Kolbenstange der Einfederweg s nur 2 mm beträgt, beträgt er im Vergleichsfall 11 mm. Durch die geschilderte Maßnahme ist also der verfügbare Verstellweg der Gasfeder, und damit die verfügbare Höhenverstellung der Stuhlsäule um 9 mm erhöht worden. Bereits bei V_{O}/V_{U} > 10 tritt eine deutliche Reduktion des Einfederweges ein.

## Patentansprüche

1. Stuhl-Gasfeder
- mit einem aus einem Außenzylinder (11) und einem Innenzylinder (12) gebildeten Gehäuse (5),
- mit einem zwischen Innenzylinder (12) und Außenzylinder (11) ausgebildeten Überströmkanal (24),
- mit einem im Innenzylinder (12) verschiebbar angeordneten, den Innenzylinder in zwei Gehäuseräume (16, 15) unterteilenden, eine Kolbenoberseite (36) und eine Kolbenunterseite (35) aufweisenden Kolben (14),
- mit einer am Kolben (14) angebrachten, aus dem Gehäuse (5) herausgeführten Kolbenstange (7),
- mit einer an einem Ende des Gehäuses (5) angeordneten Führung (17) für die Kolbenstange (7),
- mit mindestens einem den Gehäuseraum (15) zwischen der Kolbenunterseite (35) und der Führung (17) mit dem Überströmkanal (24) verbindenden Verbindungskanal (23), und
- mit einem am anderen Ende des Gehäuses (5) angeordneten, eine Schließstelle (30a) zum wahlweisen Verbinden des Gehäuseraumes (16) zwischen de Kolbenoberseite (36) und der Schließstelle (30a) mit dem Überströmkanal (24) aufweisenden Ventil (25),
**dadurch gekennzeichnet,**
**daß** der Überstromkanal extrem eng ist, und
**daß** bei weitestmöglich aus dem Gehäuse (5) ausgefahrener Kolbenstange (7) für das Volumen (V_{O}) des Gehäuseraumes (16) zwischen der Schließstelle (30a) des Ventils (25) und der Kolbenoberseite (36) im Verhältnis zum Volumen (V_{U}) des Gehäusraumes (15) zwischen Kolbenunterseite (35) und Führung (17), des mindestens einen Verbindungskanals (23), des Überströmkanals (24) und des Raumes im Ventil (25) bis zu Schließstelle (30a) gilt V_{O}/V_{U} > 10.

2. Stuhl-Gasfeder nach Anspruch 1, **dadurch gekennzeichnet, daß** gilt V_{O}/V_{U} > 20.

3. Stuhl-Gasfeder nach Anspruch 2, **dadurch gekennzeichnet, daß** gilt V_{O}/V_{U} > 30.

4. Stuhl-Gasfeder nach Anspruch 3, **dadurch gekennzeichnet, daß** gilt V_{O}/V_{U} > 40.

## Claims

1. A chair gas spring, comprising
- a housing (5) formed by an exterior cylinder (11) and an interior cylinder (12),
- an overflow channel (24) formed between the interior cylinder (12) and the exterior cylinder (11),
- a piston (14), which is displaceable in the interior cylinder (12), dividing the interior cylinder into two housing chambers (16, 15), and which has an upper side (36) and a lower side (35),
- a piston rod (7) mounted on the piston (14) and extended out of the housing (5),
- a guide (17) for the piston rod (7), the guide (7) being disposed at an end of the housing (5),
- at least one passageway (23) connecting the housing chamber (15), formed between the lower side (35) of the piston and the guide (17), with the overflow channel (24), and
- a valve (25), which is disposed at the other end of the housing (5) and has a closing spot (30a) for alternatively connecting the housing chamber (16), formed between the upper side (36) of the piston and the closing spot (30a), with the overflow channel (24),
**characterized in that**
the overflow channel (24) is extremely narrow and that
when the piston rod (7) is extended out of the housing (5) as far as possible, V_{O}/V_{U} > 10 applies to the volume (V_{O}) of the housing chamber (16) between the closing spot (30a) of the valve (25) and the upper side (36) of the piston in relation to the volume (V_{U}) of the housing chamber (15) between the lower side (35) of the piston and the guide (17), of the at least one passageway (23), of the overflow channel (24) and of the space in the valve (25) as far as to the closing spot (30a).

2. A chair gas spring according to claim 1, **characterized in that** V_{O}/V_{U} > 20 applies.

3. A chair gas spring according to claim 2, **characterized in that** V_{O}/V_{U} > 30 applies.

4. A chair gas spring according to claim 3, **characterized in that** V_{O}/V_{U} > 40 applies.

## Revendications

1. Ressort à gaz pour siège, comportant
- un boîtier (5) formé par un cylindre extérieur (11) et par un cylindre intérieur (12),
- un canal de déversement (24) réalisé entre le cylindre intérieur (12) et le cylindre extérieur (11),
- un piston (14) agencé mobile en translation dans le cylindre intérieur (12), subdivisant le cylindre intérieur en deux chambres de boîtier (16, 15) et présentant une face supérieure de piston (36) et une face inférieure de piston (35),
- une tige de piston (7) agencée sur le piston (14) et menée hors du boîtier (5),
- un guidage (17) pour la tige de piston (7) agencé à une extrémité du boîtier (5),
- au moins un canal de liaison (23) reliant la chambre de boîtier (15) entre la face inférieure de piston (35) et le guidage (17) au canal de déversement (24), et
- une valve (25) agencée à l'autre extrémité du boîtier (5) et présentant un emplacement de fermeture (30a) pour la liaison sélective de la chambre de boîtier (16) entre la face supérieure de piston (36) et l'emplacement de fermeture (30a) au canal de déversement (24),
**caractérisé en ce que**
le canal de déversement est extrêmement étroit, et dans l'état déployé au maximum de la tige de piston (7) hors du boîtier (5), le rapport entre le volume (Vₒ) de la chambre de boîtier (16), entre l'emplacement de fermeture (30a) de la valve (25) et la face supérieure de piston (36), et le volume (V_{U}) de la chambre de boîtier (15) entre la face inférieure de piston (35) et le guidage (17) dudit au moins un canal de liaison (23), du canal de déversement (24) et de l'espace dans la valve (25) jusqu'à l'emplacement de fermeture (30a) satisfait la relation : V_{O}/V_{U} > 10.

2. Ressort à gaz pour siège selon la revendication 1, **caractérisé en ce que** V_{O}/V_{U} > 20.

3. Ressort à gaz pour siège selon la revendication 2, **caractérisé en ce que** V_{O}/V_{U} > 30.

4. Ressort à gaz pour siège selon la revendication 3, **caractérisé en ce que** V_{O}/V_{U} > 40.
